# EUROPEAN PATENT SPECIFICATION

(11) **EP 4 124 750 B1**
(45) Date of publication and mention of the grant of the patent: **26.02.2025**
(21) Application number: 21187868.1
(22) Date of filing: 27.07.2021
(51) Int. Cl.: F03D 13/20, E04H 12/20

(54) **STAY CABLE CONNECTION ASSEMBLY**
HALTESEIL-VERBINDUNGSANORDNUNG
ENSEMBLE DE CONNEXION DE CÂBLE D'ÉTAI

(43) Date of publication of application: 01.02.2023
(73) Proprietor: Siemens Gamesa Renewable Energy Innovation & Technology S.L., 31621 Sarriguren (Navarra) (ES)
(72) Inventor: Jespersen, Martin, 4000 Roskilde (DK)
(74) Representative: SGRE-Association

(56) References cited:
- CN-A- 108 506 169
- DE-A1- 102012 104 508
- DE-C1- 3 706 389
- KR-B1- 101 881 104

## Description

### FIELD OF THE INVENTION

The present invention relates to a stay cable connection assembly, to a wind turbine comprising a stay cable and a respective stay cable connection assembly and to a method of aligning a bearing surface of such stay cable connection assembly for mounting a stay cable.

### BACKGROUND

Stay cables, also called "guy cables", are used for stabilizing tall structures, such as towers or masts. Stay cables are furthermore used in bridge-building, for example for supporting the bridge deck. A typical application are wind turbine towers, wherein the additional stability provided by the stay cables allows for a slender and optimized tower structure. A foundation is used to connect the stay cable to ground. A stay cable connection assembly and anchorage is used to connect the stay cable to such foundation. A steel adaptor plate is for example mounted to a concrete structure, and the stay cable is attached to the adaptor plate, for example by means of a ring nut screwed onto a stay cable termination and bearing against a bearing plate.

As the stay cable is tensioned, significant forces are applied to the stay cable termination and the bearing plate. If the axis of the stay cable termination is not perpendicular to the bearing plate and thus to the steel adaptor plate, the stay cable termination will experience significant bending moments. Generally, as the foundation can only be constructed with a certain degree of precision, and as likewise, the erection of the tower will result in a certain positioning error in horizontal direction, which can be up to or even exceed 200 mm, a misalignment between the bearing plate and the termination of the stay cable often occurs. When such misaligned stay cable is tensioned, a permanent bending moment is originated near the cable termination. Further, oscillation of the tower results in oscillation of the cable tension. Permanent bending moments reduce the cable ULS (ultimate limit state) strength. The tension oscillations translate into oscillating bending moments experienced by the end of the stay cable. As a result, the cable experiences significant fatigue and may be damaged.

Furthermore, as the cable is generally tensioned by tensioning the cable strands using wedges, which bite into the strands, it is often not possible to re-tension the stay cable. In general, the entire stay cable would need to be replaced. However, in view of the slender structure of the respective wind turbine tower, which is supported and held in place by the stay cables, it is not possible to replace the stay cable without unmounting the whole wind turbine nacelle and upper tower sections. A misalignment between the steel adaptor plate and the slope of the cable at its termination can accordingly result in significant drawbacks. Conventional attempts to avoid such misalignment are generally labour-intensive and cumbersome to implement.

In the past, for stay cables, the tolerances have been met by adjusting the bearing plate to align with the stay cable by using for example screws. Alternatively, hinges have been introduced as part of the bearing plate assembly, allowing the bearing plate to tilt freely and adjust itself to the inclination of the stay cable, so that no alignment is required. Such configuration is however complex and less robust. Alternatively, tolerances have been included in the design of the stay cable and bearing plate for which there is a design penalty and resulting inefficiency. Considering the generous foundation execution tolerances, such solution is however hardly achievable.

KR 101 881 104 B1 discloses an engagement between a transverse support beam and the lower end of a hanger of a bridge. The lower end of the hanger is fixed to a transverse support beam by a length-adjustable connection part. By rotating a movable bolt, a movable wedge can be slid longitudinally to adjust the length.

DE 10 2012 104508 A1 refers to a tower structure comprising at least two tower sections arranged one above the other.

At a connection point between both tower sections, a leveling device is arranged for aligning the upper tower section substantially vertically.

It is accordingly desirable to connect a stay cable in a fast and efficient way to a respective foundation or other anchoring point while avoiding a respective misalignment and other drawbacks of the prior art.

### SUMMARY

There is accordingly a need to improve the connecting of a stay cable to a support structure that supports the end of the stay cable and in particular to provide such connection in a simple and efficient way that facilitates and accelerates the connection procedure.

This need is met by the features of the independent claims. The dependent claims describe embodiments of the invention.

According to an embodiment of the invention, a stay cable connection assembly is provided, which comprises a support and a bearing surface configured to bear a load applied by the stay cable. The stay cable connection assembly is configured to transfer the load to the support. The stay cable connection assembly (abbreviated herein as "connection assembly") further includes a first adjustment plate which is wedge-shaped and arranged between the bearing surface and the support and a second adjustment plate which is likewise wedge-shaped and arranged between the bearing surface and the support. At least one of the first and second adjustment plates is configured to be rotatable to adjust an orientation of the bearing surface with respect to the support.

Such connection assembly may allow the connection of a stay cable in such a way that respective bending moments are avoided for the target preload cable sag, i.e. for the cable sag (and thus orientation of the termination) present when the cable is tensioned to the target preload. In particular, by rotating the first and/or second adjustment plate, the orientation of the bearing surface can be adjusted to that it is essentially perpendicular to an axial direction of the end of the stay cable to be mounted to the connection assembly, in particular of a termination thereof. Such two wedged adjustment plates furthermore allow a tilting angle between the bearing surface and the support to be adjusted over a certain range without having to disassemble the connection assembly, in particular without having to exchange any elements thereof. The adjustment of the orientation of the bearing surface can thus be performed fast and efficiently and in a simple manner. Even if there are errors present in the positioning of the tower and/or foundation, it becomes possible to provide an alignment between the stay cable and the support that avoids bending moments associated with execution errors. Adjusting the orientation of the bearing surface in particular relates to adjusting an amount and a direction of a tilting (inclination angle) of the bearing surface with respect to the support, i.e. an adjustment of an angle formed between a surface normal of the bearing surface and a surface normal of the support.

Preferably, both adjustment plates are rotatable.

The stay cable connection assembly may further comprise a bearing plate providing the bearing surface on a side of the bearing plate facing away from the support. The second adjustment plate may be the bearing plate, or it may be a separate plate distinct from the bearing plate and arranged between the bearing plate and the support. Whereas the former configuration provides a simplified construction of the connection assembly, the later configuration allows for example the providing of two identical adjustment plates and of a bearing plate having parallel end faces, thereby facilitating the manufacturing thereof. The adjustment plates may in particular be shim plates, and the connection assembly may accordingly comprise two such wedge-shaped shim plates.

It is particularly beneficial if the first adjustment plate and/or the second adjustment plate has a handle configured to allow manual rotation of the respective adjustment plate. By such configuration, the relative angular position between the two adjustment plates and the angular position of each adjustment plate with respect to the support can be changed fast and efficiently. Preferably, the handle is provided on the thicker part of the wedge-shaped adjustment plate, in particular at the circumferential position at which the thickness of the adjustment plate is largest. The handle may have a bar shape, a C-shape or the like.

In an embodiment, the first adjustment plate and/or the second adjustment plate has a first end face and a second end face, wherein the first end face is inclined with respect to the second end face by an angle of inclination. The angle of inclination may lie within a range of 0.5° to 10°, e.g. within the range of 0.7° to 5°, 1° to 3°, for example at about 1.5°. The angle may also be termed "skew angle". If both plates have a skew angle of 1.5°, the total amount of inclination may for example be adjusted between 0° and 3°. The adjustment plates may thus be kept relatively thin while providing a sufficient amount of angular adjustment.

The angle of inclination of the adjustment plates may be selected so as to match the expected range of tolerances on the alignment of the bearing plate.

The first adjustment plate and/or the second adjustment plate may have an annular shape with a central bore and first and second annular end faces. The first or the second annular end face may be perpendicular to an axial direction of the bore. The wedge shape may accordingly be achieved by only skewing one end face of the respective plate.

The first and second adjustment plates may be arranged such that the inclined end faces are in contact with each other, i.e. the slanted surfaces are in contact. In other configurations, an intermediate piece may be provided between the slanted surfaces, or the slanted surfaces may be provided on opposite sides, in axial direction, of the adjustment plates, or may be provided so that they face in the same axial direction. If the inclined surfaces face each other and are in contact, the first and second adjustment plates may form a cylinder and may combine to a total angle of inclination of 0° if the largest thickness of the plates is arranged at opposing angular positions, and may amount to twice the angle of inclination if the largest thickness of both plates is positioned at the same angular position.

In an embodiment, an angle of inclination between a first end face and a second end face of the first and second adjustment plates is substantially the same for both plates. In particular, the first and second adjustment plates may have substantially the same shape. Accordingly, the adjustment plates are easy to manufacture. As they are complementary in such configuration, the total angle of inclination can be adjusted between 0° and twice the individual angle of inclination. In other embodiments, the angles of the first and second adjustment plates may be different.

To provide a particularly large inclination, the first and second adjustment plates may form a first set of plates, and the stay cable connection assembly may comprise at least a further set of plates including third and fourth adjustment plates. It should be clear that by adding further sets of adjustment plates, the possible range of angles of inclination between the bearing surface and the support may further be increased. In other embodiments, a single further wedge-shaped adjustment plate may be added for achieving larger angles of inclination. If the angle of inclination of such single additional adjustment plate is twice that of the angle of inclination of the first and second adjustment plates, the connection assembly may still be adjusted for a total of 0° inclination.

It should be clear that such second set of plates may have a configuration similar to the one of the first set of plates, but that the adjustment plates of such second set may also have a different angle of inclination and/or a different thickness.

The support may comprise an adapter plate, in particular a steel adapter, and the adapter plate may be configured to be attached to a concrete structure, for example by means of an anchor of a post tension strand fixed to the concrete structure.

In an embodiment, the connection assembly further comprises a fixing plate configured to be mounted to the support. At least one, preferably both of the first and second adjustment plates are arranged between the fixing plate and the support. The fixing plate may be tightened to the support to fix the position of the respective at least one adjustment plate. Such fixation allows the determination of the actual orientation of the bearing surface achieved by the rotation of the adjustment plates.

Preferably, the bearing plate is mounted to the fixing plate. The fixing plate may be mounted to the support in a releasable way, for example by studs, threaded bolts, or other connecting members. Connecting members that are releasable from a side of the support facing away from the fixing plate may be employed for mounting the fixing plate to the support. Loosening the fixing plate when the bearing plate is mounted is thus possible. When the whole assembly, including the support, bearing plate, fixing plate and adjustment plates is mounted to the foundation, the connecting members may be untightened, thus releasing the pressure on the adjustment plates and allowing the adjustment of the orientation of be bearing surface by rotation of one or more of the adjustment plates. Providing the bearing plate and the fixing plate as separate plates facilitates achieving the desired strength of the assembly.

Generally, the bearing plate will be facing downwards when mounting a stay cable of a bridge or tower, which extends in an upward direction. The connecting members of the fixing plate may be configured and arranged such that untightening the connecting members results in the bearing plate and fixing plate moving downwards (in particular falling) by their own weight, thus releasing pressure on the adjustment plates. In particular, the center of gravity of the bearing plate and fixing plate assembly may be determined and the connecting members may be positioned so as to ensure that loosening of the connecting members releases the pressure on the adjustment plates while avoiding damage to the connecting members, e.g. studs or bolts.

It should be clear that in other configurations, no separate fixing plate may be provided, and the bearing plate may directly be attached to the support by the connecting members (the adjustment plates being arranged between bearing plate and support). In even other embodiments, the bearing plate may be mounted after fixing the position of the adjustment plates by means of the fixing plate, so that the correct orientation can be affirmed prior to attaching the stay cable. The fixing plate may for example have parallel end faces. The bearing plate may also have parallel end faces. The bearing plate may be mounted to the fixing plate. Accordingly, the orientation of the end face of the fixing plate that faces away from the support may be indicative of the orientation of the bearing surface on the bearing plate. It can thus be determined, by means of the fixing plate, if the bearing plate will have the desired orientation with respect to the support and/or the stay cable termination. Such fixing plate furthermore facilitates assembly and readjustment of the orientation, since it can be made significantly thinner and thus less heavy as the bearing plate. However, pre-assembly of bearing plate, fixing plate and support is preferred, as outlined above.

It should be clear that for mounting a wind turbine stay cable, the bearing plate may have significant size, it may for example exceed 40 cm, 50 cm or more in outer diameter. Mounting and unmounting of such large and heavy plate or of the whole assembly is accordingly relatively cumbersome or even impossible. Preassembly and adjustment by releasing the fixing plate is thus advantageous.

The connection assembly may further comprise the stay cable, and the stay cable may be a wind turbine stay cable configured to be connected to a wind turbine tower to support the wind turbine tower. The adjustment plates, the bearing plate and/or the fixing plate may be made of steel.

According to a further embodiment of the invention, a wind turbine comprising a wind turbine tower, a stay cable connected at one end to the wind turbine tower, and a stay cable connection assembly having any of the configurations described herein is provided. The other end of the stay cable is connected to the stay cable connection assembly such that the bearing plate supports the load applied by the stay cable. The stay cable connection assembly may in particular have a configuration in which by rotation, the first and/or second adjustment plates are adjusted such that an axial direction of a termination of the stay cable at the end at which it is mounted to the connection assembly is substantially perpendicular to the bearing surface at the target preload of the stay cable.

According to a further embodiment, a method of aligning a bearing surface for mounting a stay cable is provided. The method comprises arranging a first adjustment plate between the bearing surface and a support. The first adjustment plate is wedge-shaped, wherein the bearing surface is configured to bear a load applied by the stay cable, the load being transferred to the support. The method further includes providing a second adjustment plate, wherein the second adjustment plate is wedge-shaped and arranged between the bearing surface and the support. Further, at least one of the first and second adjustment plates is rotated to adjust an orientation of the bearing surface with respect to the support. By such rotation, the inclination/tilting of the bearing surface with respect to the support is in particular adjustable, both in amount and direction of the tilting. By such method, advantages similar to the ones outlined further above may be achieved.

For example, adjusting the orientation of the bearing surface with respect to the support may comprise adjusting the angular position of the first adjustment plate with respect to the second adjustment plate to adjust the amount of inclination of the bearing surface with respect to the support and/or adjusting the angular position of both adjustment plates (i.e. by the same amount and in the same direction) with respect to the support to adjust the angular direction of the inclination. Different amounts of misalignment and different angular directions of misalignment between the stay cable and the support may thus be compensated by rotation of the adjustment plates.

The method may further comprise bringing the bearing surface into an orientation in which an axial direction of a termination of a stay cable (at the stay cable target preload) is substantially perpendicular to the bearing surface at an axial position of the bearing surface by said rotating. In other words, the adjustment is performed such that the bearing surface is substantially parallel to a contact surface of a ring nut to be mounted to the stay cable termination when the stay cable is at its target preload, i.e. at the tension it is supposed to have when the tower or bridge is finally erected. The contact surface may contact the bearing surface when the ring nut is mounted. By such adjustments, bending moments on the termination of the stay cable may be avoided when the stay cable has the target preload.

The method may further comprise fixing the angular orientation of the first and/or second adjustment plate. This may for example be done by clamping at least one of the first and second adjustment plates, preferably both, between a fixing plate and the support. Screws, bolts, or threaded rods may for example be used to mount the fixing plate to the support, and these may be tightened to apply sufficient pressure to keep the first and second adjustment plates in place.

The method may further comprise determining a required orientation of the bearing surface (for example based on an expected orientation of the termination of the stay cable at a cable sag corresponding to the target preload); performing the rotating of the adjustment plates to orient the bearing surface in accordance with the required orientation; fixing the angular orientation of the first and second adjustment plates (e.g. by means of a fixing plate); and measuring an orientation of a surface that is indicative of the orientation of the bearing surface (this may be the bearing surface if the bearing plate is pre-assembled to the support; it may also be the surface of the fixing plate facing away from the support if the bearing plate is mounted after the adjustment). If the expected or measured orientation of the bearing surface does not correspond to the required orientation (i.e. bearing surface not parallel to ring nut contact surface), the rotating of the first and second adjustment plates may be repeated. Otherwise, if the orientation corresponds to the required orientation, the method may continue with the mounting of a stay cable to the stay cable connection assembly, for example by inserting the stay cable and mounting a ring nut to a stay cable termination.

It should be clear that before performing a second rotating step, the fixing of the angular position may be released, for example by loosening a respective fixing plate. However, as can be seen, it is not necessary to completely dismount a component of the connection assembly or to disassemble the connection assembly.

The method may further comprise the preassembly of the support, first and second adjustment plates, the bearing plate and optionally the fixing plate and mounting of the assembly to a foundation, prior to performing the adjustment. It is also possible to mount the bearing plate after said rotating has been performed.

It should be clear that the method may comprise further steps, for example any of the steps described herein. Furthermore, it should also be clear that the connection assembly may have a configuration that allows it to carry out the method in any of the embodiments disclosed herein.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing showing a wind turbine including stay cables according to an embodiment of the invention.
Fig. 2 is a schematic drawing showing a foundation and a stay cable connection assembly according to an embodiment of the invention.
Fig. 3 is a schematic drawing showing a stay cable connection assembly according to an embodiment of the invention.
Fig. 4 is a schematic drawing showing adjustment of the orientation of a bearing surface by rotation of adjustment plates according to an embodiment of the invention.
Fig. 5 is a schematic drawing showing a sectional side view of two adjustment plates according to an embodiment of the invention.
Fig. 6 is a schematic drawing showing a particular implementation of a stay cable connection assembly according to an embodiment of the invention.
Fig. 7 is a flow diagram illustrating a method of aligning a bearing surface for mounting a stay cable in accordance with an embodiment of the invention.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

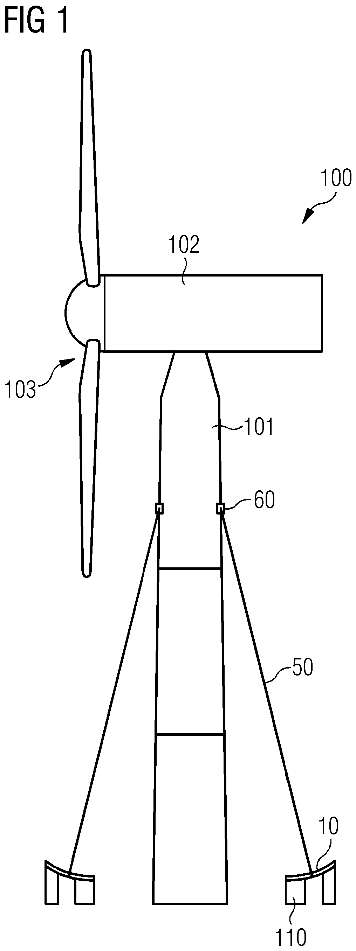

Fig. 1 schematically illustrates a wind turbine 100 including a wind turbine tower 101, a nacelle 102 and a rotor 103. The wind turbine tower 101 is supported by stay cables 50. Only two exemplary stay cables are shown in Fig. 1, but it should be clear that further stay cables may be provided around wind turbine tower 101 and at different vertical positions on the tower. On the tower 101, a stay cable piece 60 is provided, to which one of the stay cables 50 is attached. The other end of stay cable 50 is attached to a foundation 110 by means of a stay cable connection assembly 10. In general, when planning and constructing the wind turbine, the end of the stay cable 50 meets the connection assembly 10 at a predefined slope, i.e. the axial direction at the end of the stay cable 50 forms a certain angle with ground. This angle can vary when wind turbine tower 101 is erected, for example due to errors in the positioning and inclination of the tower. Furthermore, stay cable 50 experiences sag that depends on the actual cable tension, which can however be determined based on the properties of the cable and a load estimation (target pretension) and is thus generally considered in the planning. Furthermore, the positioning and erection of the foundation 110 is associated with a certain error. Accordingly, in practice, there can be misalignment between the end of the stay cable 50 and the connection assembly 10, to that the end (in particular the axial direction of the cable termination) is no longer perpendicular to a bearing surface of the connection assembly. As mentioned above, bending moments can be experienced by the end of the stay cable 50 as a result thereof. Oscillation of the tension in the stay cable 50 further results in oscillation of the bending moments, which provokes fatigue damage to the stay cable 50. The present solution thus provides a stay cable connection assembly that minimizes such misalignment and accordingly the occurrence of respective bending moments. In particular, embodiments of the connection assembly 10 provide for an efficient and fast alignment of the bearing surface that bears the load applied by the stay cable 50 to the actual orientation of the respective end of the stay cable 50 that is to be connected to the connection assembly 10.

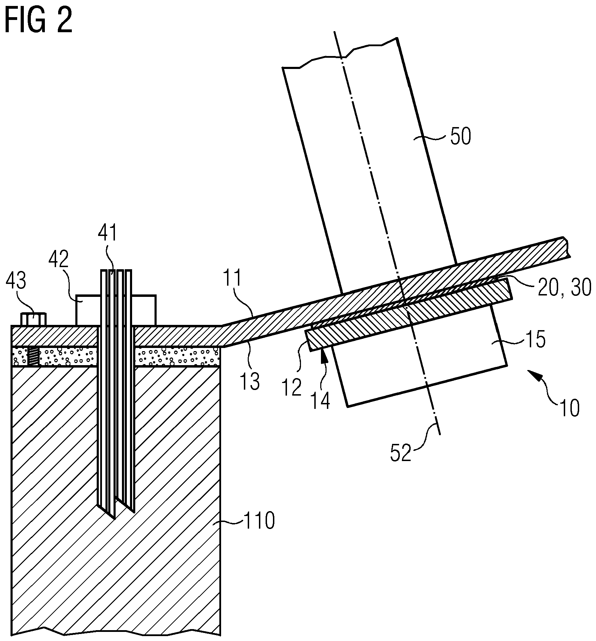

Fig. 2 schematically illustrates an exemplary implementation of the foundation 110 and the connection assembly 10 of Fig. 1. The connection assembly 10 includes a support 11, which is exemplarily provided in form of an adapter plate 11. Foundation 110 can include a concrete wall, as shown, and the adapter plate 11 can be placed on the foundation 110 and held in place for an initial rough adjustment by a screw 43. The adapter plate may be fixed to the foundation 110 by means of a post-tensioning strand 41 and plate anchor 42. After post-tensioning the strands, grouting may be performed. Accordingly, the support 11 can be adhered firmly to the foundation 110. It should be clear that on the other side of support 11, a respective foundation is provided (not shown in Fig. 2).

To attach the stay cable 50 to the support 11, a bearing plate 12 with a bearing surface 14 is provided. Stay cable 50 is led through respective openings in the support 10 and bearing plate 12 and is held in place and tensioned by a ring nut 15, that can for example be screwed onto an outer thread 56 of the termination of stay cable 50. It should be clear that the general tensioning and mounting of stay cable 50 is known, and any such known ways of mounting stay cable 50 may be employed. For example, the individual strands of the stay cable 50 may be pre-tensioned using a jack and respective wedges that clamp the strands in place, and the stay cable 50 may further be tensioned by tightening the ring nut 15.

As mentioned above, there may be a misalignment between the bearing surface 14 and an axial direction 52 of the end of stay cable 50. To avoid bending moments, the surface normal of the bearing surface 14 should have the same direction as the axial direction 52 of stay cable 50, i.e. the axial direction 52 should be perpendicular to the bearing surface 14 at the target preload of the stay cable 50.

To achieve such alignment, the connection assembly 10 includes first and second adjustment plates 20, 30, which can be provided in form of shim plates. By means of these adjustment plates 20, 30, an orientation (in particular inclination) of the bearing surface 14 with respect to a surface 13 of support 11 on which the adjustment plates 20, 30 rest can be adjusted. The adjustment plates 20, 30 allow an adjustment of both, the amount of inclination and the direction of inclination. Accordingly, the orientation (in particular the surface normal) of the bearing surface 14 can be brought into alignment with the axial direction 52 of the end of the stay cable 50.

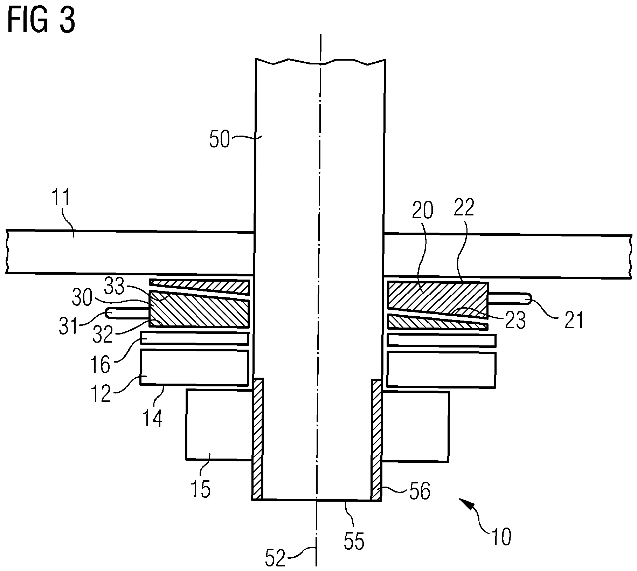

Fig. 3 illustrates a particular implementation of the connection assembly 10 of Figs. 1 and 2, so that the above explanations apply equally to the embodiment of Fig. 3. Fig. 3 shows a sectional side-view through the center of the stay cable 50. As can be seen, the first adjustment plate 20 and the second adjustment plate 30 each have a wedge shape. First adjustment plate 20 has a first end face 22 that is perpendicular to an axial direction of a through-bore through the adjustment plate 20. It further has a second end face 23 that is inclined with respect to the first end face 22, i.e. it is not perpendicular to the axial direction of the through-bore. The angle of inclination of end face 23 can be chosen in dependence on the desired amount of adjustment of the orientation of bearing surface 14. The first adjustment plate 20 further has a handle 21 that is configured to allow a manual rotation of the adjustment plate, in particular around the axis of its through-bore.

The second adjustment plate 30 is configured correspondingly. It likewise includes an end face 32 that is substantially perpendicular to an axial direction of its through-bore, and a second end face 33 that is inclined with respect to the first end face 32. The second adjustment plate 30 further includes a handle 31 configured to enable a manual rotation of the adjustment plate 30.

In the present example, the configuration of the second adjustment plate 30 is similar to that of the first adjustment plate 20, they may in particular have the same shape. This facilitates manufacturing of the adjustment plates. They are however oriented differently in the connection assembly 10; in particular, the inclined end faces 23, 33 face each other in the example of Fig. 3. As illustrated, in such configuration, if the angles of inclination of the two adjustment plates 20, 30 are arranged such that they oppose each other (i.e. plate 30 is turned by 180° compared to plate 20), the two inclinations match each other so that the combination of both plates 20, 30 takes a cylindrical shape, resulting in a parallel orientation of end faces 22, 32 and a combined inclination of zero. By rotating one of the plates by 180°, a maximum combined inclination can be achieved that corresponds to twice the inclination of each individual adjustment plate 20, 30. Any other angle of inclination between this maximum angle and zero can be achieved by respectively rotating one adjustment plate with respect to the other. Further, by rotating both adjustment plates 20, 30 in the same direction by the same rotation angle, the direction of the combined total inclination can be adjusted. As the adjustment plates 20, 30 are arranged between the bearing surface 14 and the support 11, the orientation of the bearing surface 14 with respect to support 11 and thus with respect to the axial direction 52 of the end of stay cable 50 can be adjusted. As the adjustment is achieved by rotating the plates 20, 30 using the handles 21, 31, respectively, the adjustment can be made without disassembling any parts of the connection assembly 10. The adjustment can thus be made in a fast, simple and efficient manner.

In Fig. 3, the thickness of the adjustment plates 20, 30 is exaggerated in order to illustrate the wedge shape of these plates. As shown in Fig. 2, plates 20, 30 can be significantly thinner, and in particular much thinner than the bearing plate 12. It should be clear that in other implementations, both end faces 22, 23 of one or both adjustment plates may be inclined. Furthermore, the first and second adjustment plates 20, 30 may be configured differently and may in particular have different angles of inclination. The range of the total inclination may thereby be increased, although a certain offset of the total inclination angle will result. Furthermore, it should be clear that further adjustment plates can be provided. For example, a further pair of adjustment plates can be provided, thus extending in the range over which the orientation of bearing surface 14 can be adjusted. It would also be conceivable to add a third adjustment plate, which may for example have a larger angle of inclination chosen such that the angle of inclination can be compensated by the combined angles of inclination of the first and second adjustment plates. In such configuration, the range can be extended while a combined angle of inclination of 0° can still be achieved.

In even further implementations, the second adjustment plate 30 may not be a separate plate, but may be provided by the bearing plate 12. In particular, one or both of the axial end faces of bearing plate 12 may be inclined. Bearing plate 12 may then be provided with handle 32 and may be rotated to adjust the orientation of bearing surface 14, in combination with the first adjustment plate 20. It should be clear that also in such configuration, the second adjustment plate, i.e. the bearing plate 12, is arranged between the bearing surface 14 and the support 11, as the bearing surface 14 faces away from the support 11 (i.e. in such configuration, the second adjustment plate provides the bearing surface 14). Such configuration reduces the number of components of the connection assembly 10, although it makes the manufacturing of the bearing plate 12 more difficult. Also, the adjustment becomes more difficult in view of the weight of bearing plate 12.

Fig. 3 further illustrates the outer thread 56 on the termination 55 of the stay cable 50. As can be seen, when the ring nut 15 is tightened, the ring nut 15 bears against the bearing surface 14 and applies the tensional load of the stay cable 50 to the bearing surface 14. The load is transferred by the connection assembly, in particular via the first and second adjustment plates 20, 30 to the support 11.

Optionally, a fixing plate 16 may be provided. By means of such fixing plate 16, it is possible to fix the first and second adjustment plates 20, 30 in a particular angular position. After adjustment (rotation) of the first and second adjustment plates 20, 30, the fixing plate 16 can be tightened to the support 11, so that plates 20, 30 are fixed in place and no longer rotatable. As shown, fixing plate 16 and bearing plate 12 may have substantially parallel axial end faces. Providing a separate bearing plate and adjustment plate facilitates providing the required attachment to the support for the fixing plate while allowing the bearing plate to retain the desired strength.

The stay cable connection assembly 10 may comprise the support 11, the first and second adjustment plates 20, 30 and the bearing plate 12. It may further comprise the fixing plate 16. It may further comprise the ring nut 15 and the stay cable 50.

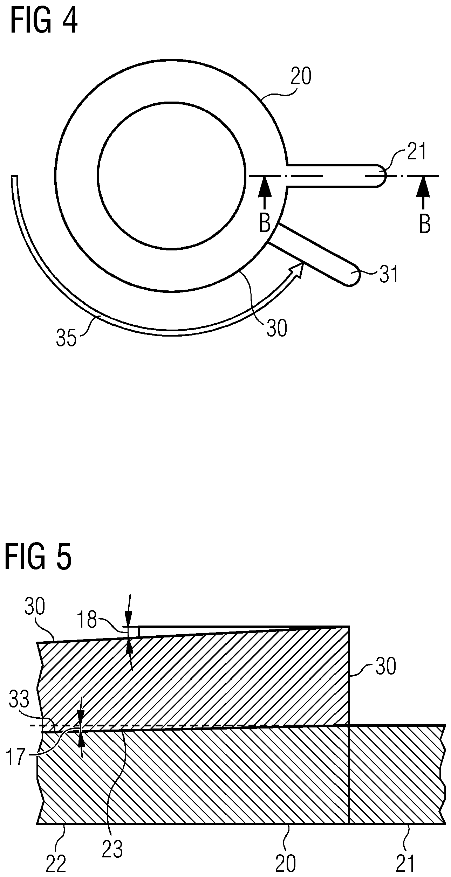

Fig. 4 is a top view of the first and second adjustment plates 20, 30, wherein adjustment plate 30 is located underneath adjustment plate 20, so that only handle 31 is visible. For example by rotating handle 31 in the angular direction 35, as indicated by the arrow, the combined inclination of both adjustment plates 20, 30 can be adjusted.

By rotating both handles 21, 31 equally, the direction in which the inclination is present can be adjusted.

Fig. 5 shows a section through the first and second adjustment plates 20, 30 taken along line B-B of Fig. 4. As can be seen, plate 20 has a wedge shape with an angle of inclination 17 of the inclined surface 23. Furthermore, the second adjustment plate 30 likewise has an inclined surface with a respective inclination angle (not shown), resulting in the combined angle of inclination 18. As an example, if the inclination angle is 1.5° for each adjustment plate 20, 30, the combined inclination angle 18 can be adjusted between 0° and 3°. It should be clear that this is only an example, and that other values can be chosen for the angle of inclination of each adjustment plate.

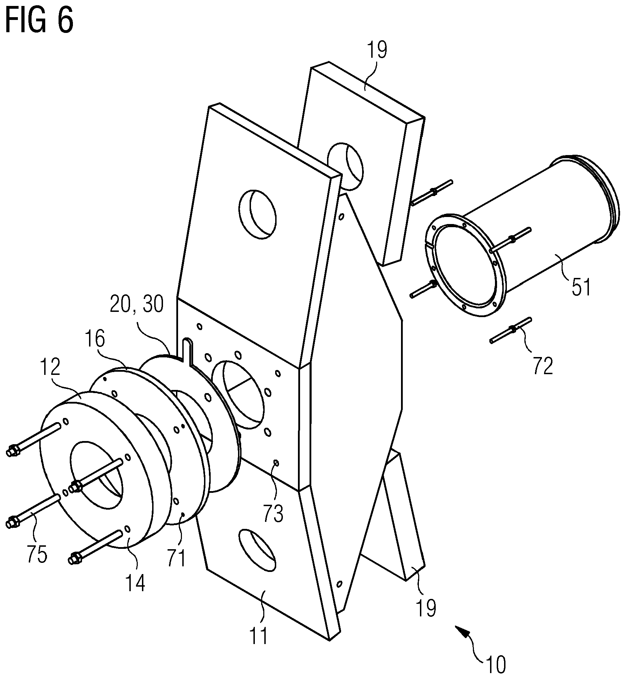

Fig. 6 illustrates a particular implementation of the connection assembly 10 shown in Figs. 1 to 5. In the example of Fig. 6, adjustment plates 20, 30 have the same angular setting, so that they cannot be distinguished in view of their low thickness. Further, as illustrated, a fixing plate 16 is provided and can be used to fix the angular position of adjustment plates 20, 30. For this purpose, connecting members, e.g. screws or bolts 72, can be provided and can be screwed into screw holes 71 provided in fixing plate 16. Respective through-holes 73 are provided in the support 11. The bearing plate 12 is mounted to the fixing plate 16, for example by using further bolts, screws or other fastening elements 75. The fixing plate 16 and bearing plate 12 can be mounted to support 16 prior to mounting the assembly to the foundation 110. As the fixing plate 16 can be untightened to release the pressure on the adjustment plates, the orientation of the bearing surface 14 can be checked and adjusted prior to mounting the stay cable. The stay cable can be fed through tube 51 and through the through-holes in the elements 20, 30, 16 and 12 of the connection assembly 10, and can thereafter be attached in a conventional way, for example by using a respective ring nut 15 and employing known pre-tensioning methods. Fig. 6 furthermore illustrates further through-holes in the support 11 that are used for attaching the support 11 to the foundations 110, e.g. by using a respective plate anchor for anchoring the support 11 to the post-tension strands 41. The support 11 of Fig. 6 essentially corresponds to the support 11 of Fig. 2, wherein the stabilizing sidewalls welded to the steel adaptor plate are not shown in Fig. 2. Plates 19 are bearing plates that bear the load applied by the post-tension strand anchorage (plates 19 are not shown in Fig. 4).

It should be clear that Fig. 6 only illustrates a possible implementation of the connection assembly 10 and that several modifications are conceivable. For example, the fixing plate 16 is optional, and it may have a different configuration. It may for example have a different shape and may be mounted differently to the support 11. Further, as mentioned before, only one adjustment plate may be provided as a shim plate, and the other adjustment plate may be provided by the bearing plate 12, for example by providing one surface of the bearing plate 12 with a respective inclination with respect to the axial direction of the through-bore. However, providing two shim plates 20, 30 is preferred, as these can be relatively thin and are thus relatively easy to mount and to rotate. Further, it should be clear that the shape of the support 11 is only exemplary, and that for a different type of foundation, a different support 11 may be used. To adjust the position at which wedges of the termination of the stay cable 50 grip the cable strands, it also possible to add spacers between the bearing plate 12 and the ring nut 15 (not shown in Fig. 6). The ring nut 15 may accordingly not directly abut against the bearing surface 14, but the load may be transferred to the bearing surface 14 via respective spacers.

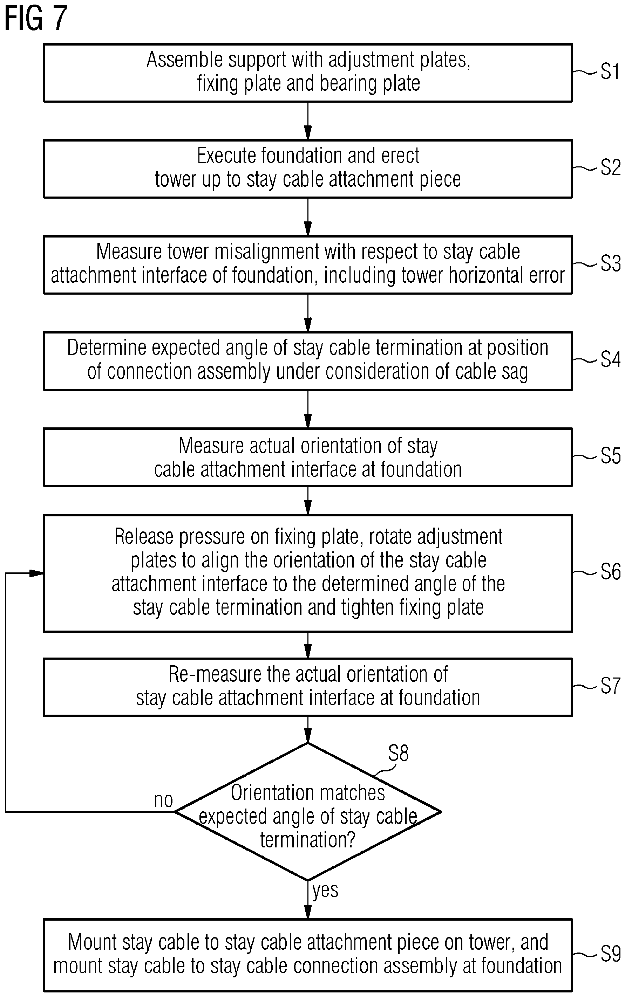

Fig. 7 shows a flow chart illustrating a method according to an embodiment. In step S1, pre-assembly of the adaptor plate, adjustment plates, fixing plate and bearing plate occurs, e.g. at ground level. Such assembly is easier compared to assembling these components once the adaptor plate has been mounted to the foundation. The foundation 110 is executed in step S2, wherein during execution of the foundation, the assembly is lifted and placed at the desired foundation position and attached to the foundation. Step S2 further includes the errection of the wind turbine tower 101 up to the stay cable attachment piece 60. In step S3, a misalignment between the wind turbine tower 101 and the stay cable attachment interface provided by connection assembly 10 is measured. The orientation of the stay cable attachment interface may be the orientation of the bearing surface 14 (if the bearing plate is pre-assembled), but may also correspond to the outer surface of fixing plate 16 if the bearing plate is not yet mounted. Such misalignment may for example include a tower horizontal error, which may be due to a small deviation in the positioning or inclination, or due to manufacturing tolerances and the like of the tower elements.

In step S3, it is estimated how the stay cable termination 55, i.e. the end of the stay cable to be attached to the connection assembly, is angled at the position of the connection assembly. Such estimation considers cable sag at the target preload, i.e. at the tension that the stay cable will finally have. Based on such expected angle of the stay cable termination, the required orientation of the bearing surface 14 can be derived, since the bearing surface 14 should be arranged perpendicular to the expected axial direction 52 of the stay cable termination 55, i.e. parallel to the contact surface of the ring nut 15. In step S4, the actual orientation of the stay cable attachment interface, in particular of the bearing surface 14, is measured. An angular error between the required orientation of the bearing surface (i.e. the orientation of the ring nut contact surface) and the actual orientation of the bearing surface can thus be derived. In step S5, the fixing plate is loosened and the first and/or second alignment plates are adjusted, in particular by rotation using handles 22, 32, to align the orientation of the bearing surface 14 to the determined angle of the stay cable termination, i.e. to the required orientation of bearing surface 14. As the angular deviation between the required orientation and the actual orientation of the bearing surface is known, the required adjustment angles can be determined and the adjustment plates can be set accordingly. Furthermore, the fixing plate 16 is then retightened to lock the first and second adjustment plates in place.

In step S6, the actual orientation of the stay cable attachment interface is re-measured, in particular by measuring the orientation of the bearing surface 14. In step S7, it is checked if the measured orientation matches the expected angle of the stay cable termination, i.e. if it matches the required orientation. For example, the angle between the bearing plate 14 and the ring nut contact surface (the expected position thereof) may be evaluated. If this is not the case, steps S5 and S6 are repeated, and the adjustment plates 20, 30 are in particular set such that the remaining discrepancy in the orientation is compensated. If it is determined that the required orientation has been achieved in step S7, the stay cable 50 is mounted to the stay cable attachment piece 60 on the wind turbine tower 101, and the other end of the stay cable and its termination 55 is connected to the connection assembly 10 at the foundation 110, in particular by making use of the ring nut 15. It should be clear that any attachment and tensioning means known in the art may be employed for mounting the stay cable 50 to the connection assembly 10, such as using respective pre-tensioning methods and performing a tensioning of the overall stay cable 50 using the ring nut 15. The method may comprise further steps, e.g. mounting the bearing plate if it has not been pre-assembled in step S1. Further, for the present solution, several of the steps shown in Fig. 7 are optional and not required for performing the adjustment of the bearing surface 14, such as steps S1 to S5, S7 and S9. In particular, the adjustment occurs by rotating the adjustment plates 20, 30 such that the bearing surface 14 is adjusted to be perpendicular to the axial direction 52 of the end of the stay cable 50.

As can be taken from the above description, the angle of the bearing surface 14 can be adjusted repeatedly without the need to dismantle any parts of the connection assembly 10. In particular, only the fixing plate 16 needs to be loosened and the shim plates 20, 30 can be rotated using the respective handles for performing the adjustment. A precise alignment between bearing surface 14 and the end of the stay cable 50 can be achieved, which minimizes respective bending moments, whereby providing such alignment is facilitated by using the adjustment plates 20, 30 and can be performed fast and efficiently.

While specific embodiments are disclosed herein, various changes and modifications can be made without departing from the scope of the invention. The present embodiments are to be considered in all respects as illustrative and non-restrictive.

## Claims

1. A stay cable connection assembly, comprising:
- a support (11);
- a bearing surface (14) configured to bear a load applied by a stay cable (50), the stay cable connection assembly (10) being configured to transfer the load to the support (11);
- a first adjustment plate (20), wherein the first adjustment plate (20) is wedge-shaped and arranged between the bearing surface (14) and the support (11); and
- a second adjustment plate (30), wherein the second adjustment plate (30) is wedge-shaped and arranged between the bearing surface (14) and the support (11),
**characterized in that** at least one of the first and second adjustment plates (20, 30) is configured to be rotatable to adjust an orientation of the bearing surface (14) with respect to the support (11).

2. The stay cable connection assembly according to claim 1, wherein the stay cable connection assembly (10) comprises a bearing plate (12) providing said bearing surface (14) on a side of the bearing plate facing away from the support (11), wherein the second adjustment plate is the bearing plate (12) or is a separate plate (30) distinct from the bearing plate and arranged between the bearing plate (12) and the support (11).

3. The stay cable connection assembly according to claim 1 or 2, wherein the first adjustment plate (20) and/or the second adjustment plate (30) has a handle (21; 31) configured to allow manual rotation of the respective adjustment plate (20, 30).

4. The stay cable connection assembly according to any of the preceding claims, wherein the first adjustment plate (20) and/or the second adjustment plate (30) has a first end face (22, 32) and a second end face (23, 33), wherein the second end face (23, 33) is inclined with respect to the first end face (22, 32) by an angle of inclination (17) lying within the range of 0.5° to 10°, preferable within the range of 0.7° to 5°, more preferably within the range of 1° to 3°.

5. The stay cable connection assembly according to any of the preceding claims, wherein the first adjustment plate (20) and/or the second adjustment plate (30) has an annular shape with a central bore and first and second annular end faces, wherein the first annular end face (22, 32) or the second annular end face is perpendicular to an axial direction of the bore.

6. The stay cable connection assembly according to any of the preceding claims, wherein for the first adjustment plate (20) and for the second adjustment plate (30), an angle of inclination (17) between a first end face (22, 32) and a second end face (23, 33) of the respective adjustment plate is substantially the same.

7. The stay cable connection assembly according to any of the preceding claims, wherein the first and second adjustment plates (20, 30) form a first set of plates, wherein the stay cable connection assembly comprises at least a further set of plates including third and fourth adjustment plates.

8. The stay cable connection assembly according to any of the preceding claims, further comprising a fixing plate (16) configured to be mounted to the support (11), wherein at least one of the first and second adjustment plates (20, 30) is arranged between the fixing plate (16) and the support (11), wherein the fixing plate (16) can be tightened to the support (11) to fix the position of the respective at least one adjustment plate (20, 30).

9. The stay cable connection assembly according to any of the preceding claims, wherein the connection assembly (10) comprises the stay cable (50), wherein the stay cable (50) is a wind turbine stay cable configured to be connected to a wind turbine tower (101) to support the wind turbine tower.

10. A wind turbine comprising:
- a wind turbine tower (101);
- a stay cable (50) connected at one end to the wind turbine tower (101);
- a stay cable connection assembly (10) according to any of the preceding claims, wherein the other end (55) of the stay cable (50) is connected to the stay cable connection assembly (10) such that the bearing surface (14) supports the load applied by the stay cable (50).

11. A method of aligning a bearing surface for mounting a stay cable (50), wherein the bearing surface (14) is configured to bear a load applied by the stay cable (50), the load being transferred to a support (11), wherein the method comprises:
- arranging a first adjustment plate (20) on the support (11), wherein the first adjustment plate (20) is wedge-shaped and configured to be arranged between the bearing surface (14) and the support (11),
- providing a second adjustment plate (30), wherein the second adjustment plate (30) is wedge-shaped and configured to be arranged between the bearing surface (14) and the support (11), and **characterized by**
- rotating at least one of the first and second adjustment plates (20, 30) to adjust an orientation of the bearing surface (14) with respect to the support (11).

12. The method according to claim 11, wherein said rotating to adjust the orientation of the bearing surface (14) with respect to the support (11) comprises adjusting the angular position of the first adjustment plate (20) with respect to the second adjustment plate (30) to adjust the amount of inclination (18) of the bearing surface (14) with respect to the support (11) and/or adjusting the angular position of both adjustment plates (20, 30) with respect to the support (11) to adjust the angular direction of the inclination (18).

13. The method according to claim 11 or 12, further comprising bringing the bearing surface (14) into an orientation in which an axial direction (52) of a termination (55) of the stay cable (50) is substantially perpendicular to the bearing surface (14) at an axial position of the bearing surface (14) by said rotating.

14. The method according to any of claims 11-13, further comprising fixing the angular orientation of the first and/or second adjustment plate (20, 30), preferably by clamping at least one of the first and second adjustment plates (20, 30) between a fixing plate (16) and the support (11).

15. The method according to any of claims 11-14, further comprising:
- determining a required orientation of the bearing surface (14);
- performing said rotating to orient the bearing surface in accordance with the required orientation;
- fixing the angular orientation of the first and second adjustment plates (20, 30);
- measuring an orientation of a surface that is indicative of the orientation of the bearing surface (14); and
- repeating said rotating if the orientation of the bearing surface (14) does not correspond to the required orientation.

## Patentansprüche

1. Schrägseilverbindungsanordnung, umfassend:
- einen Träger (11);
- eine Lagerfläche (14), die dazu ausgelegt ist, eine durch ein Schrägseil (50) aufgebrachte Last zu tragen, wobei die Schrägseilverbindungsanordnung (10) dazu ausgelegt ist, die Last auf den Träger (11) zu übertragen;
- eine erste Einstellplatte (20), wobei die erste Einstellplatte (20) keilförmig und zwischen der Lagerfläche (14) und dem Träger (11) angeordnet ist; und
- eine zweite Einstellplatte (30), wobei die zweite Einstellplatte (30) keilförmig und zwischen der Lagerfläche (14) und dem Träger (11) angeordnet ist,
**dadurch gekennzeichnet, dass** mindestens eine der ersten und zweiten Einstellplatte (20, 30) dazu ausgelegt ist, drehbar zu sein, um die Orientierung der Lagerfläche (14) in Bezug zum Träger (11) einzustellen.

2. Schrägseilverbindungsanordnung nach Anspruch 1, wobei die Schrägseilverbindungsanordnung (10) eine Lagerplatte (12) umfasst, welche die Lagerfläche (14) auf einer vom Träger (11) abgewandten Seite der Lagerplatte vorsieht, wobei die zweite Einstellplatte die Lagerplatte (12) ist oder eine von der Lagerplatte getrennte und zwischen der Lagerplatte (12) und dem Träger (11) angeordnete Platte (30) ist.

3. Schrägseilverbindungsanordnung nach Anspruch 1 oder 2, wobei die erste Einstellplatte (20) und/oder die zweite Einstellplatte (30) einen Griff (21; 31) aufweist, der dazu ausgelegt ist, die manuelle Drehung der jeweiligen Einstellplatte (20, 30) zuzulassen.

4. Schrägseilverbindungsanordnung nach einem der vorstehenden Ansprüche, wobei die erste Einstellplatte (20) und/oder die zweite Einstellplatte (30) eine erste Stirnfläche (22, 32) und eine zweite Stirnfläche (23, 33) aufweist, wobei die zweite Stirnfläche (23, 33) in Bezug zur ersten Stirnfläche (22, 32) in einem Neigungswinkel (17) geneigt ist, der im Bereich von 0,5° bis 10°, vorzugsweise im Bereich von 0,7° bis 5°, weiter bevorzugt im Bereich von 1° bis 3°, liegt.

5. Schrägseilverbindungsanordnung nach einem der vorstehenden Ansprüche, wobei die erste Einstellplatte (20) und/oder die zweite Einstellplatte (30) eine Ringform mit einer Mittelbohrung und einer ersten und zweiten ringförmigen Stirnfläche aufweist, wobei die erste ringförmige Stirnfläche (22, 32) oder die zweite ringförmige Stirnfläche senkrecht zur Axialrichtung der Bohrung ist.

6. Schrägseilverbindungsanordnung nach einem der vorstehenden Ansprüche, wobei bei der ersten Einstellplatte (20) und der zweiten Einstellplatte (30) der Neigungswinkel (17) zwischen der ersten Stirnfläche (22, 32) und der zweiten Stirnfläche (23, 33) der jeweiligen Einstellplatte im Wesentlichen gleich ist.

7. Schrägseilverbindungsanordnung nach einem der vorstehenden Ansprüche, wobei die erste und zweite Einstellplatte (20, 30) einen ersten Satz Platten ausbilden, wobei die Schrägseilverbindungsanordnung mindestens einen weiteren Satz Platten mit einer dritten und vierten Einstellplatte umfasst.

8. Schrägseilverbindungsanordnung nach einem der vorstehenden Ansprüche, ferner umfassend eine Fixierplatte (16), die dazu ausgelegt ist, am Träger (11) montiert zu sein, wobei mindestens eine der ersten und zweiten Einstellplatte (20, 30) zwischen der Fixierplatte (16) und dem Träger (11) angeordnet ist, wobei die Fixierplatte (16) am Träger (11) befestigt werden kann, um die Position der jeweiligen mindestens einen Einstellplatte (20, 30) zu fixieren.

9. Schrägseilverbindungsanordnung nach einem der vorstehenden Ansprüche, wobei die Verbindungsanordnung (10) das Schrägseil (50) umfasst, wobei das Schrägseil (50) ein Windkraftanlagenschrägseil ist, das dazu ausgelegt ist, mit einem Windkraftanlagenturm (101) verbunden zu sein, um den Windkraftanlagenturm abzustützen.

10. Windkraftanlage, umfassend:
- einen Windkraftanlagenturm (101);
- ein Schrägseil (50), das an einem Ende mit dem Windkraftanlagenturm (101) verbunden ist;
- eine Schrägseilverbindungsanordnung (10) nach einem der vorstehenden Ansprüche, wobei das andere Ende (55) des Schrägseils (50) derart mit der Schrägseilverbindungsanordnung (10) verbunden ist, dass die Lagerfläche (14) die durch das Schrägseil (50) aufgebrachte Last trägt.

11. Verfahren zum Ausrichten einer Lagerfläche zur Montage eines Schrägseils (50), wobei die Lagerfläche (14) dazu ausgelegt ist, eine durch das Schrägseil (50) aufgebrachte Last zu tragen, wobei die Last auf einen Träger (11) übertragen wird, wobei das Verfahren Folgendes umfasst:
- Anordnen einer ersten Einstellplatte (20) auf dem Träger (11), wobei die erste Einstellplatte (20) keilförmig und dazu ausgelegt ist, zwischen der Lagerfläche (14) und dem Träger (11) angeordnet zu sein,
- Vorsehen einer zweiten Einstellplatte (30), wobei die zweite Einstellplatte (30) keilförmig und dazu ausgelegt ist, zwischen der Lagerfläche (14) und dem Träger (11) angeordnet zu sein, und **gekennzeichnet durch**
- Drehen mindestens einer der ersten und zweiten Einstellplatte (20, 30), um die Orientierung der Lagerfläche (14) in Bezug zum Träger (11) einzustellen.

12. Verfahren nach Anspruch 11, wobei das Drehen zum Einstellen der Orientierung der Lagerfläche (14) in Bezug zum Träger (11) das Einstellen der Winkelposition der ersten Einstellplatte (20) in Bezug zur zweiten Einstellplatte (30), um den Neigungsgrad (18) der Lagerfläche (14) in Bezug zum Träger (11) einzustellen, und/oder das Einstellen der Winkelposition beider Einstellplatten (20, 30) in Bezug zum Träger (11), um die Winkelrichtung der Neigung (18) einzustellen, umfasst.

13. Verfahren nach Anspruch 11 oder 12, ferner umfassend Bringen der Lagerfläche (14) in eine Orientierung, in der die Axialrichtung (52) eines Endes (55) des Schrägseils (50) in einer durch das Drehen erreichten Axialposition der Lagerfläche (14) im Wesentlichen senkrecht zur Lagerfläche (14) ist.

14. Verfahren nach einem der Ansprüche 11-13, ferner umfassend Fixieren der Winkelorientierung der ersten und/oder zweiten Einstellplatte (20, 30), vorzugsweise durch Einspannen mindestens einer der ersten und zweiten Einstellplatte (20, 30) zwischen einer Fixierplatte (16) und dem Träger (11).

15. Verfahren nach einem der Ansprüche 11-14, ferner umfassend:
- Bestimmen der erforderlichen Orientierung der Lagerfläche (14);
- Durchführen des Drehens zum Orientieren der Lagerfläche entsprechend der erforderlichen Orientierung;
- Fixieren der Winkelorientierung der ersten und zweiten Einstellplatte (20, 30);
- Messen der Orientierung einer Fläche, welche die Orientierung der Lagerfläche (14) anzeigt; und
- Wiederholen des Drehens, falls die Orientierung der Lagerfläche (14) nicht der erforderlichen Orientierung entspricht.

## Revendications

1. Ensemble de connexion de câble d'étai, comprenant :
- un support (11) ;
- une surface d'appui (14) configurée pour supporter une charge appliquée par un câble d'étai (50), l'ensemble de connexion de câble d'étai (10) étant configuré pour transférer la charge au support (11) ;
- une première plaque de réglage (20), dans lequel la première plaque de réglage (20) est en forme de coin et agencée entre la surface d'appui (14) et le support (11) ; et
- une deuxième plaque de réglage (30), dans lequel la deuxième plaque de réglage (30) est en forme de coin et agencée entre la surface d'appui (14) et le support (11),
**caractérisé en ce qu'**au moins une des première et seconde plaques de réglage (20, 30) est configurée pour être rotative afin de régler une orientation de la surface d'appui (14) par rapport au support (11).

2. Ensemble de connexion de câble d'étai selon la revendication 1, dans lequel l'ensemble de connexion de câble d'étai (10) comprend une plaque d'appui (12) fournissant ladite surface d'appui (14) sur un côté de la plaque d'appui opposé au support (11), dans lequel la deuxième plaque de réglage est la plaque d'appui (12) ou est une plaque séparée (30) distincte de la plaque d'appui et agencée entre la plaque d'appui (12) et le support (11).

3. Ensemble de connexion de câble d'étai selon la revendication 1 ou 2,
dans lequel la première plaque de réglage (20) et/ou la deuxième plaque de réglage (30) a une poignée (21 ; 31) configurée pour permettre la rotation manuelle de la plaque de réglage respective (20, 30).

4. Ensemble de connexion de câble d'étai selon l'une quelconque des revendications précédentes, dans lequel la première plaque de réglage (20) et/ou la deuxième plaque de réglage (30) a une première face d'extrémité (22, 32) et une seconde face d'extrémité (23, 33), dans lequel la seconde face d'extrémité (23, 33) est inclinée par rapport à la première face d'extrémité (22, 32) selon un angle d'inclinaison (17) se situant dans la plage de 0,5° à 10°, de préférence dans la plage de 0,7° à 5°, plus préférablement dans la plage de 1° à 3°.

5. Ensemble de connexion de câble d'étai selon l'une quelconque des revendications précédentes, dans lequel la première plaque de réglage (20) et/ou la deuxième plaque de réglage (30) a une forme annulaire avec un alésage central et des première et seconde faces d'extrémité annulaires, dans lequel la première face d'extrémité annulaire (22, 32) ou la seconde face d'extrémité annulaire est perpendiculaire à une direction axiale de l'alésage.

6. Ensemble de connexion de câble d'étai selon l'une quelconque des revendications précédentes, dans lequel pour la première plaque de réglage (20) et pour la deuxième plaque de réglage (30), un angle d'inclinaison (17) entre une première face d'extrémité (22, 32) et une seconde face d'extrémité (23, 33) de la plaque de réglage respective est sensiblement le même.

7. Ensemble de connexion de câble d'étai selon l'une quelconque des revendications précédentes, dans lequel les première et deuxième plaques de réglage (20, 30) forment un premier ensemble de plaques, dans lequel l'ensemble de connexion de câble d'étai comprend au moins un autre ensemble de plaques comportant des troisième et quatrième plaques de réglage.

8. Ensemble de connexion de câble d'étai selon l'une quelconque des revendications précédentes, comprenant en outre une plaque de fixation (16) configurée pour être montée sur le support (11), dans lequel au moins l'une des première et deuxième plaques de réglage (20, 30) est agencée entre la plaque de fixation (16) et le support (11), dans lequel la plaque de fixation (16) peut être serrée sur le support (11) pour fixer la position de l'au moins une plaque de réglage respective (20, 30).

9. Ensemble de connexion de câble d'étai selon l'une quelconque des revendications précédentes, dans lequel l'ensemble de connexion (10) comprend le câble d'étai (50), dans lequel le câble d'étai (50) est un câble d'étai d'éolienne configuré pour être connecté à une tour d'éolienne (101) pour soutenir la tour d'éolienne.

10. Éolienne comprenant :
- une tour d'éolienne (101) ;
- un câble d'étai (50) connecté à une extrémité à la tour d'éolienne (101) ;
- un ensemble de connexion de câble d'étai (10) selon l'une quelconque des revendications précédentes, dans lequel l'autre extrémité (55) du câble d'étai (50) est connectée à l'ensemble de connexion de câble d'étai (10) de sorte que la surface d'appui (14) supporte la charge appliquée par le câble d'étai (50).

11. Procédé d'alignement d'une surface d'appui pour le montage d'un câble d'étai (50), dans lequel la surface d'appui (14) est configurée pour supporter une charge appliquée par le câble d'étai (50), la charge étant transférée à un support (11), dans lequel le procédé comprend :
- l'agencement d'une première plaque de réglage (20) sur le support (11), dans lequel la première plaque de réglage (20) est en forme de coin et configurée pour être agencée entre la surface d'appui (14) et le support (11),
- la fourniture d'une deuxième plaque de réglage (30), dans lequel la deuxième plaque de réglage (30) est en forme de coin et configurée pour être agencée entre la surface d'appui (14) et le support (11), et **caractérisé par**
- la rotation d'au moins l'une des première et deuxième plaques de réglage (20, 30) pour régler une orientation de la surface d'appui (14) par rapport au support (11).

12. Procédé selon la revendication 11, dans lequel ladite rotation pour régler l'orientation de la surface d'appui (14) par rapport au support (11) comprend le réglage de la position angulaire de la première plaque de réglage (20) par rapport à la deuxième plaque de réglage (30) pour régler la quantité d'inclinaison (18) de la surface d'appui (14) par rapport au support (11) et/ou le réglage de la position angulaire des deux plaques de réglage (20, 30) par rapport au support (11) pour régler la direction angulaire de l'inclinaison (18).

13. Procédé selon la revendication 11 ou 12, comprenant en outre le fait d'amener la surface d'appui (14) dans une orientation dans laquelle une direction axiale (52) d'une terminaison (55) du câble d'étai (50) est sensiblement perpendiculaire à la surface d'appui (14) à une position axiale de la surface d'appui (14) par ladite rotation.

14. Procédé selon l'une quelconque des revendications 11 à 13, comprenant en outre la fixation de l'orientation angulaire de la première et/ou de la deuxième plaque de réglage (20, 30), de préférence en serrant au moins l'une des première et deuxième plaques de réglage (20, 30) entre une plaque de fixation (16) et le support (11).

15. Procédé selon l'une quelconque des revendications 11 à 14, comprenant en outre :
- la détermination d'une orientation requise de la surface d'appui (14) ;
- l'exécution de ladite rotation pour orienter la surface d'appui conformément à l'orientation requise ;
- la fixation de l'orientation angulaire des première et deuxième plaques de réglage (20, 30) ;
- la mesure d'une orientation d'une surface qui est indicative de l'orientation de la surface d'appui (14) ; et
- la répétition de ladite rotation si l'orientation de la surface d'appui (14) ne correspond pas à l'orientation requise.
